# EUROPEAN PATENT APPLICATION

(11) **EP 4 671 927 A1**
(43) Date of publication of application: **31.12.2025**
(21) Application number: 24763018.9
(22) Date of filing: 21.02.2024
(51) Int. Cl.: G06F 3/01

(54) **MEDIA FILE PROCESSING METHOD, APPARATUS AND DEVICE**

(30) Priority: 27.02.2023 CN 202310198350
(71) Applicant: Boe Technology Group Co., Ltd., Beijing 100015 (CN); Beijing BOE Technology Development Co., Ltd., Beijing 100176 (CN)
(72) Inventor: ZHANG, Qian, Beijing 100176 (CN); CUI, Tenghe, Beijing 100176 (CN); SHU, Long, Beijing 100176 (CN)
(74) Representative: Isarpatent
(86) International application number: PCT/CN2024/077853
(87) International publication number: WO 2024/179335

(57) **Abstract**

A media file processing method, apparatus, and device, belong to the technical field of media file transmission. The media file processing method of the embodiments of the present disclosure includes: (S101), determining a grayscale map track and haptic signal tracks corresponding to video data, wherein the grayscale map track includes a grayscale map corresponding to each frame in the video data, the grayscale map corresponding to each frame is used for characterizing a position distribution of a haptic region corresponding to each frame, and each haptic signal track includes a haptic signal corresponding to each haptic region in the video data; (S102), generating a first mapping table according to each grayscale value in the grayscale map tracks and the haptic signal tracks; (S103), encapsulating the first mapping table, the grayscale map track, the haptic signal tracks, and the video data to obtain a target media file.

## Description

### CROSS-REFERENCE TO RELATED APPLICATIONS

The present disclosure claims the priority of the Chinese patent application filed on February 27th, 2023 before the CNIPA, China National Intellectual Property administration with the application number of 202310198350.2, and the title of "MEDIA FILE PROCESSING METHOD, APPARATUS AND DEVICE", , which is incorporated herein in its entirety by reference.

### TECHNICAL FIELD

The present disclosure is in the technical field of media file transmission and particularly relates to a media file processing method, apparatus, and device.

### BACKGROUND

Haptic technology provides entertainment and sensory immersion in addition to audio and video media. Taking media streams such as streaming media games and mobile advertisements as examples, the user's experience and enjoyment of the media content can be significantly enhanced by adding haptic sensations to the audio/video content of the media stream.

To this end, haptic sensations have been proposed in the ISO Base Media File Format (ISOBMFF) as a first-order media type equivalent to audio and video, and as a supplement to the Motion Picture Experts Group-Dynamic Adaptive Streaming over HTTP (MPEG-DASH) standard, but this approach can only meet the single haptic interaction setting requirements of a single image.

### SUMMARY

In a first aspect, a media file processing method is provided, including:
determining a grayscale map track and haptic signal tracks corresponding to video data, wherein the grayscale map track includes a grayscale map corresponding to each frame in the video data, the grayscale map corresponding to each frame is used for characterizing a position distribution of a haptic region corresponding to each frame, and each of the haptic signal tracks includes a haptic signal corresponding to each of the haptic regions in the video data;
generating a first mapping table according to each grayscale value in the grayscale map track and the haptic signal tracks; and
encapsulating the first mapping table, the grayscale map track, the haptic signal tracks, and the video data to obtain a target media file.

In a second aspect, a media file processing method is provided, including:
acquiring and de-encapsulating a target media file, to obtain video data, a first mapping table, and a grayscale map track and haptic signal tracks corresponding to the video data, wherein the grayscale map track includes a grayscale map corresponding to each frame in the video data, and a grayscale map corresponding to each frame is used for characterizing a position distribution of a haptic region corresponding to each frame;
outputting the video data and mounting the grayscale map track;
mounting a haptic signal track corresponding to a current output grayscale map in the grayscale track according to the grayscale map track and the first mapping table; and
outputting a haptic signal in the haptic signal track corresponding to the current output grayscale map.

In a third aspect, a media file processing apparatus is provided, including:
a first determination module, configured for determining a grayscale map track and haptic signal tracks corresponding to video data, wherein the grayscale map track includes a grayscale map corresponding to each frame in the video data, the grayscale map corresponding to each frame is used for characterizing a position distribution of a haptic region corresponding to each frame, and each of the haptic signal tracks includes a haptic signal corresponding to each of the haptic regions in the video data;
a first generation module, configured for generating a first mapping table according to each grayscale value in the grayscale map tracks and the haptic signal tracks; and
a first encapsulation module, configured for encapsulating the first mapping table, the grayscale map track, the haptic signal tracks, and the video data to obtain a target media file.

In a fourth aspect, a media file processing apparatus is provided, including:
a first processing module, configured for acquiring and de-encapsulating a target media file to obtain video data, a first mapping table, and a grayscale map track and haptic signal tracks corresponding to the video data, wherein the grayscale map track includes a grayscale map corresponding to each frame in the video data, and a grayscale map corresponding to each frame is used for characterizing a position distribution of a haptic region corresponding to each frame;
a second processing module, configured for outputting the video data and mounting the grayscale map track;
a third processing module, configured for mounting a haptic signal track corresponding to a current output grayscale map in the grayscale track according to the grayscale map track and the first mapping table; and
a fourth processing module, configured for outputting a haptic signal in haptic signal track corresponding to the current output grayscale map.

In a fifth aspect, a media file processing device is provided, including a processor and a memory storing a program or instruction executable on the processor, wherein the program or instruction, when executed by the processor, implements the steps of the media file processing method according to the first aspect.

In a sixth aspect, a media file processing device is provided, including a processor and a memory storing a program or instruction executable on the processor, wherein the program or instruction, when executed by the processor, implements the steps of the media file processing method according to the second aspect.

In a seventh aspect, a computing processing device is provided, including:
a memory, having a computer-readable code stored therein; and
one or more processors, when the computer-readable code is performed by the one or more processors, the computing processing device implements the media file processing method according to the first aspect or the second aspect.

In an eighth aspect, a computer program is provided, including a computer-readable code which, when run on a computing processing device, causes the computing processing device to implement the media file processing method according to the first aspect or the second aspect.

In a ninth aspect, a computer-readable medium is provided, having a computer program according to the eighth aspect stored thereon.

In a tenth aspect, a media file processing system is provided, including a video production device and a video output device, the video production device is used to execute the steps of the media file processing method as described in the first aspect, and the video output device is used to execute the steps of the media file processing method as described in the second aspect.

In an eleventh aspect, a readable storage medium is provided, on which a program or instruction is stored, the program or instruction, when executed by a processor, implements the steps of the media file processing method as described in the first aspect, or implements the steps of the media file processing method as described in the second aspect.

In a twelfth aspect, a chip is provided, including a processor and a communication interface, wherein the communication interface is coupled to the processor, and the processor is used to run programs or instructions to implement the media file processing method as described in the first aspect, or to implement the media file processing method as described in the second aspect.

In a thirteenth aspect, a computer program/program product is provided, which is stored in a storage medium and executed by at least one processor to implement the steps of the media file processing method as described in the first aspect or the second aspect.

The above description is only an overview of the technical solution of the present disclosure. In order to have a clearer understanding of the technical means of the present disclosure, it can be implemented according to the content of the specification. In order to make the above and other purposes, features, and advantages of the present disclosure more obvious and understandable, the specific embodiments of the present disclosure are listed below.

### BRIEF DESCRIPTION OF THE DRAWINGS

In order to more clearly illustrate the technical solutions of the embodiments of the present disclosure or the related art, the figures that are required to describe the embodiments or the related art will be briefly described below. Apparently, the figures that are described below are some embodiments of the present disclosure, and a person skilled in the art can obtain other figures according to these figures without paying creative work.
FIG. 1 is a schematic diagram of an existing media file encapsulating principle according to an embodiment of the present disclosure;
FIG. 2 is a flow chart of a media file processing method according to an embodiment of the present disclosure;
FIG. 3 is a schematic diagram of a player processing flow according to an embodiment of the present disclosure;
FIG. 4 is a schematic diagram of a starting sample of a plurality of haptic signal tracks according to an embodiment of the present disclosure;
FIG. 5 is a schematic diagram of a grayscale map according to an embodiment of the present disclosure;
FIG. 6 is a schematic diagram of a telesurgery implementation flow according to an embodiment of the present disclosure;
FIG. 7 is a flow chart of another media file processing method according to an embodiment of the present disclosure;
FIG. 8 is a block diagram of a media file processing apparatus according to an embodiment of the present disclosure;
FIG. 9 is a block diagram of another media file processing apparatus according to an embodiment of the present disclosure;
FIG. 10 schematically shows a block diagram of a computing processing device for performing the method according to the present disclosure; and
FIG. 11 schematically shows a storage unit for holding or carrying program code implementing the method according to the present disclosure.

### DETAILED DESCRIPTION OF THE EMBODIMENTS

In order to clarify the purpose, technical solution, and advantages of the embodiment of the present disclosure, a clear and complete description of the technical solution in the embodiment of the present disclosure will be provided below in conjunction with the accompanying drawings. Obviously, the described embodiments are a part of the embodiments of the present disclosure, not all of the embodiments. Based on the embodiments disclosed in the present disclosure, all other embodiments obtained by persons skilled in the art without creative work are within the scope of protection of the present disclosure.

The terms "first", "second", etc. in the present disclosure are used to distinguish similar objects and not to describe a specific order or sequence. It should be understood that the terms used in this way can be interchanged in appropriate circumstances, so that the embodiments of the present disclosure can be implemented in order other than those illustrated or described herein, and the objects distinguished by "first" and "second" are usually of the same class, without limiting the number of objects. For example, the first object can be one or at least two. In addition, in the specification and claims, "and/or" represents at least one of the connected objects, and the character "/" generally indicates a "or" relationship between the related objects.

In order to better understand the media file processing method of embodiments of the present disclosure, a brief description of some relevant basic concepts follows.

Box: It can also be called a frame or a container or an atom, Box is defined as "An object-oriented building block defined by a unique type identifier and length (called 'atom' in some specifications, including the first definition of MP4)". Container Box: Container Box is defined as "A box whose sole purpose is to contain and group a set of related boxes". Movie Box: Movie Box is defined as "A container box whose sub-boxes define the metadata for a presentation ('moov')". Media Data Box: Media Data Box is defined as "A container box which can hold the actual media data for a presentation ('mdat')". ISO Base Media File: ISO Base Media File is defined as "The name of the file format described in this specification", where the box is the basic unit that constitutes the ISO basic media file. Presentation: Presentation is defined as "One or more motion sequences (q.v.), possibly combined with audio". Sample: Sample is defined as "In non-hint tracks, a sample is an individual frame of video, a time-contiguous series of video frames, or a time-contiguous compressed section of audio. In hint tracks, a sample defines the formation of one or more streaming packets. No two samples within a track may share the same time-stamp". The sample in the grayscale map track/haptic signal tracks described in the present disclosure refers to: a single grayscale map/haptic signal, or a plurality of grayscale maps/haptic signals that are continuous in time. Sample Description: Sample Description is defined as "A structure which defines and describes the format of some number of samples in a track". Sample Table: Sample Table is defined as "A packed directory for the timing and physical layout of the samples in a track". Chunk: Chunk is defined as "A contiguous set of samples for one track". Track: Track is defined as "A collection of related samples (q. v.) in an ISO base media file. For media data, a track corresponds to a sequence of images or sampled audio. For hint tracks, a track corresponds to a streaming channel". That is, a track refers to a series of samples encapsulated in the ISO base media file format with temporal attributes. Hint Track: Hint track is defined as "a special track which does not contain media data. Instead, it includes instructions for packaging one or more tracks into a streaming channel". Hinter: Hinter is defined as "a tool that is run on a file including only media, to add one or more hint tracks to the file and so facilitate streaming".

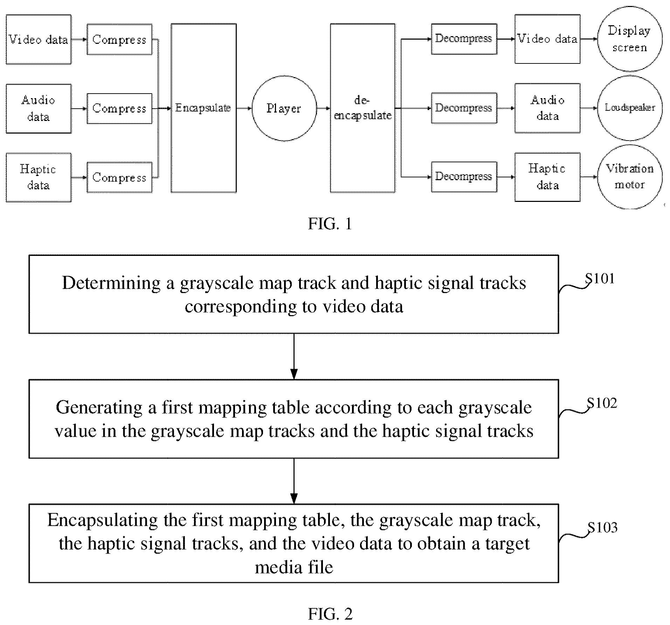

An existing media file encapsulation principle is shown in FIG. 1. After the video production device compresses the video data, the audio data, and the haptic data into a code stream respectively, the three would be uniformly encapsulated into an encapsulated media file according to the ISO basic media file format, so as to transmit the encapsulated media file to a video playing device (namely, a player). After the player sequentially de-encapsulates and decompresses the encapsulated media file, a corresponding actuator can be triggered to output corresponding data, such as a display screen, a speaker, and a vibration motor are triggered to output video data, audio data, and haptic data, respectively.

Although haptic has been proposed in the ISO basic media file format as a first-order media type equivalent to audio and video, and the haptic has been proposed as a supplement to the MPEG-DASH standard, an encapsulated media file generated according to the existing ISO basic media file format can only support a player to realize a single haptic interaction of a single image, and cannot satisfy different haptic interaction requirements of different regions of an image.

Illustratively, the application of encapsulated media files in different haptic interaction scenes in different regions of a screen is illustrated in three scenes as follows.

### Scene 1: Game scene

Taking a gun battle game as an example, when a character "shoots" in a certain haptic region in a screen, triggering a haptic interaction mode corresponding to the haptic region (for example, triggering a vibration motor on the right part of a mobile phone to vibrate) would greatly enhance the substitution feeling of the game. The triggering process can be seen as: after the mobile phone receives the instruction of "triggering the haptic actuator corresponding to the haptic region", the mobile phone will find the haptic actuator and use the haptic actuator to "output" a piece of vibration signal corresponding to the haptic region. Since a game is accompanied by media file transmission processes such as downloading and updating, it is necessary to characterize a vibration signal in a sub-haptic region in an encapsulated media file according to a certain standard, so that a video production device (namely, a game production device) and a player transmit and parse the encapsulated media file.

### Scene 2: Movie scene

Taking a company that specializes in the production of vibrating seats as an example. Its main customers are cinemas that provide immersive movie viewing. It can be seen that in the field of movies (especially 4D movies), providing haptic feedback can bring a completely new experience for cinema viewers and at the same time bring distinctive product power for cinemas. Such movies are ideally implemented by encapsulating a high-quality video signal source, a high-quality audio signal source, and a high-quality haptic signal source in an encrypted carrier. To meet the requirement to synchronize various signals, such as the requirement for different haptic interactions in different regions of an image, the existence of new encapsulating techniques is required.

In addition, in the field of games, especially in role-playing game (RPG), it often happens that a scene video is inserted when a scene is switched, so that a player can better bring in a game scene, experience character actions, mood changes, etc. If the game characters in the inserted video stand up, open the door, explode the surrounding scene, and run the character with different haptic shock feedback, the scene experience will be more realistic. So, it would be a very good application scene to add such haptic feedback to the movie output of a mobile device, but this would also require the encapsulation of haptic signals (in particular the encapsulation of different haptic signals corresponding to different haptic regions). It will be appreciated that the haptic signal itself is similar to an audio signal, and the above-mentioned encapsulation of the haptic signal can be considered as: the video file encapsulates an audio signal once and then encapsulates a haptic signal once to generate an encapsulated media file.

### Scene 3: Telesurgery scene

In the 5G era, there are frequent reports of telesurgery cases, the main requirement of which is the transmission of ultra-high-definition video in the surgical field. The 5G network can provide high-bandwidth, high-quality network services anytime and anywhere to meet the realization of telesurgery applications. However, a big difference between telesurgery and on-site surgery lies in haptic feedback. The ears are our main sound sensory organs, the eyes are our main visual sense organs, and the skin tissue is a haptic sense organ that can receive a variety of signals including hot and cold, smooth and rough, soft and hard, painful and itchy. Without these haptic feedbacks, the doctor performing the telesurgery will not receive any haptic sense signals from the patient, such as feedback on the hardness of the surgical lesion tissue, haptic feedback of obstruction of the operating device, and feedback on the smoothness of the opening and closing of surgical instruments. The lack of any sense signal will affect the progress of the operation. This requires that the telesurgery signal incorporate haptic feedback during transmission, which also requires the encapsulation of different haptic signals corresponding to different haptic regions.

With regard to the problems existing in the related art, the present disclosure designs a media file encapsulation method including a haptic signal, and mainly solves problems of: the encapsulation of multiple haptic signal tracks; when the haptic signal tracks hang; mapping of haptic regions and haptic signal tracks. Different haptic signals corresponding to different regions in the media file can be encapsulated and the player can be flexibly parsed.

In a first aspect, a flow chart of a media file processing method according to an embodiment of the present disclosure is shown with reference to FIG. 2, and the method may include the following steps:
Step S101: determining a grayscale map track and haptic signal tracks corresponding to video data.

Among them, the grayscale map track includes a grayscale map corresponding to each frame in the video data, the grayscale map corresponding to each frame is used for characterizing a position distribution of a haptic region corresponding to each frame, one haptic signal track corresponds to at least one grayscale value in the grayscale map, and each of the haptic signal tracks includes a haptic signal corresponding to each haptic region in the video data.

In a specific implementation, for each frame of the video data, the video production device divides into a plurality of haptic regions from the frame and establishes corresponding haptic signal tracks for the plurality of haptic regions. After completing the establishment of the haptic signal tracks, the video production device may assign different grayscale values to different haptic signal tracks, for example, may assign one or more grayscale values to one haptic signal track, and the one or more grayscale values assigned to the haptic signal track is used for describing the position distribution of the haptic region corresponding to the haptic signal tracks in the video data. Specifically, for any frame, at least one grayscale map characterizing the position distribution of the haptic region in the frame is generated based on the mapping relationship between the haptic signal tracks and the haptic regions in the frame and the grayscale values to which each of the haptic signal tracks is assigned. After generating the grayscale maps respectively corresponding to each frame in the video data, the video production device may encapsulate the grayscale maps respectively corresponding to each frame into the grayscale map track according to the ISO basic media file format.

Step S102: generating a first mapping table according to each grayscale value in the grayscale map tracks and the haptic signal tracks.

In a specific implementation, the video production device counts the grayscale values contained in each grayscale map in the grayscale map track, determines haptic signal tracks respectively corresponding to each grayscale value, and generates a first mapping table for characterizing a mapping relationship between each grayscale value and each of the haptic signal tracks.

Step S103: encapsulating the first mapping table, the grayscale map track, the haptic signal tracks, and the video data to obtain a target media file.

The grayscale map track can be considered to be a piece of video with very little color, each frame (namely, each of grayscale maps) in the video is very flat, and only in the edge portion between the grayscale map regions corresponding to two haptic signal tracks, there will be color jumps. However, in order to minimize the required transmission file between the video production device and the player, the grayscale map track can be encoded, namely, encoding and compressing the grayscale map track, the haptic signal tracks and video data, and then encapsulating the same, and the size of the target media file required to be transmitted can be reduced.

It can be understood that, considering that after a video output device obtains the grayscale map track by de-encapsulating the target media file, although the position distribution of the haptic regions of each frame in the video data can be known according to each of the grayscale maps in the grayscale map track, since the haptic signal tracks corresponding to different haptic regions are different, the video output device cannot mount the haptic signal tracks correctly to realize different haptic interactions of different regions of an image without knowing the mapping relationship between the haptic regions and the haptic signal tracks. For this reason, the present disclosure adds the first mapping table to the target media file, so that after parsing out the grayscale maps in the grayscale map track, the video output device can determine the haptic signal tracks corresponding to each of grayscale values in the grayscale map according to the first mapping table, thereby being able to mount correct haptic signal tracks for different haptic regions.

It can be seen from the above-mentioned steps that by encapsulating the grayscale map track, the haptic signal tracks and the video data together in the target media file, characterizing the position distribution of the haptic region of each frame in the video data is realized in the target media file, and by adding the first mapping table to the target media file, characterizing the mapping relationship between each grayscale value in the grayscale map track and each of the haptic signal tracks is realized in the target media file, thereby enabling the target media file to realize the haptic signal encapsulation of the sub-haptic region, which meet the different haptic interaction requirements in different regions of the image.

### Embodiment I

The present embodiment describes an example of the first mapping table.

Considering that the player needs to mount the haptic signal tracks corresponding to the parsed-out grayscale map after parsing out the grayscale map from the grayscale map track, in order to solve the mapping problem between the grayscale map parsed out by the player and the haptic signal tracks, the present disclosure proposes the first mapping table and adds the same to the target media file so as to inform the player of the haptic signal tracks corresponding to the parsed out grayscale map.

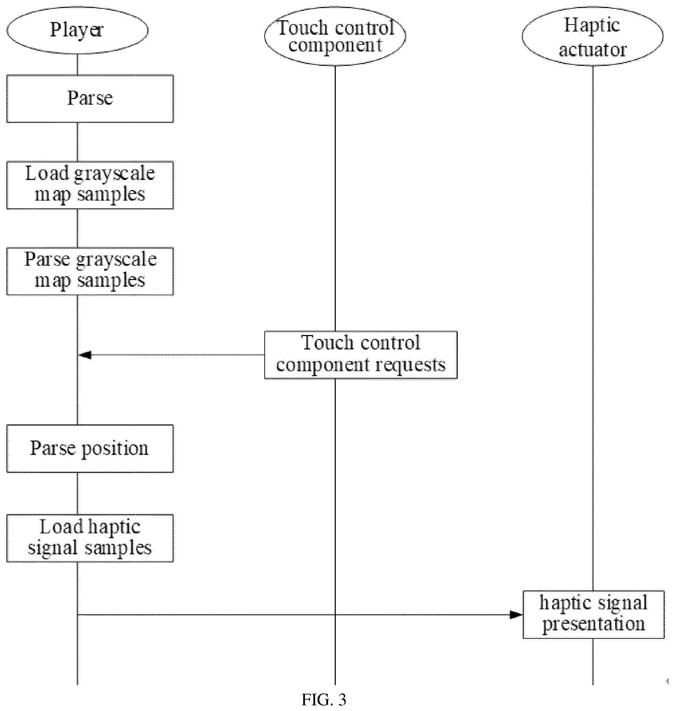

In this embodiment, as shown in FIG. 3, the player acquires and de-encapsulates the target media file to obtain the video data, the first mapping table, the grayscale map track corresponding to the video data, and the haptic signal tracks, outputs the video data and mounts the grayscale map track, and mounts the haptic signal track corresponding to the current output grayscale map in the grayscale map track according to the grayscale map track and the first mapping table, and outputs the haptic signal in the haptic signal track corresponding to the current output grayscale map. Specifically, the player will extract a grayscale map (or grayscale map sample) from the mounted grayscale map track, and parse the grayscale value of the grayscale map according to the first mapping table to find a corresponding haptic signal track for mounting. Here, the grayscale map sample will be specifically described in Embodiment III and will not be described in detail here.

As a possible embodiment, the player responds to detecting a haptic interaction operation with respect to a current output image in the video data, such as: when detecting a haptic interaction operation such as a touch operation, a touch control component will send a request to the player, and then the player finds a sample (namely, a haptic signal sample) corresponding to the current output image from the haptic signal track corresponding to a haptic region where the haptic interaction operation currently mounted is located, and triggers a haptic actuator to output a haptic signal in the sample corresponding to the current output image. The video production device is a device having an encoding function, the player is a device having a decoding function, and the video production device, the player, the touch control component and the haptic actuator can be deployed on the same hardware device or can be deployed separately, and the present disclosure is not limited thereto.

In one embodiment, the target media file includes a box of the grayscale map track; a video production device adds the first mapping table to the box of the grayscale map track to implement encapsulation of the first mapping table.

As one possible implementation, the video production device generates a first target box according to the first mapping table; the first target box is added to the box of the grayscale map track.

In this embodiment, the present disclosure newly proposes a Box type, i.e. Box (Gray_Value_To_Track Box, abbreviated as gvtt) for storing a mapping relationship between a grayscale value and a track, for adding the first mapping table to the target media file. The gvtt connects grayscale values within the grayscale map track with other signal tracks, such as haptic signal tracks, audio tracks, etc. Adding a gvtt (namely, the first target box) which stores the first mapping table to the box of the grayscale map track, so that when parsing the grayscale map track (namely, parsing the box of the grayscale map track), a player can directly obtain the first mapping table associated with the grayscale map track, and then realizing correct mounting of haptic signal tracks according to the first mapping table.

As one possible implementation, a first mapping table is generated based on the grayscale value respectively corresponding to each of the haptic signal tracks and the track index for each of the haptic signal tracks.

In specific implementation, the basic composition of gvtt may be defined as: a table consisting of grayscale values and track indexes of other signal tracks corresponding thereto. For example, the syntax of gvtt is defined as follows:

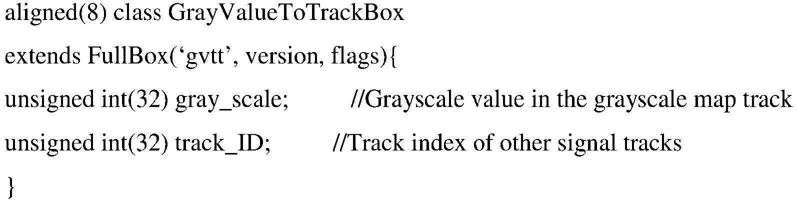

After parsing out a grayscale value from the box of the grayscale map track, the player can determine the track index corresponding to the grayscale according to the first mapping table stored in the first target box, and then find a corresponding haptic signal track to mount according to the track index.

### Embodiment II

The present embodiment describes an example of the second mapping table.

In video output, a player needs to mount haptic signal tracks for output, and in the case of multiple haptic regions in the video data, there is a switching problem for multiple haptic signal tracks. The player needs to find and mount the correct haptic signal tracks in time as the track switches so that samples can be subsequently extracted from the mounted haptic signal tracks in time for haptic signal output.

In order to avoid the delay of haptic signal output, the player needs to find and mount the correct haptic signal tracks in time when the track is switched. Considering that if a plurality of haptic signal tracks (e.g. all haptic signal tracks are mounted) are mounted in advance, although the mounting of haptic signal tracks in time can be achieved, a large buffer space will be occupied, and if the haptic signal tracks are found and mounted only when the tracks are switched, a delay effect will be generated. Therefore, in order to solve the problem of when haptic signal tracks are suspended, the present disclosure proposes a second mapping table and adds it to the target media file to inform the player of the order of the required mounting time for each of the haptic signal tracks.

In this embodiment, the video production device generates a second mapping table according to the execution order of each of the haptic signal tracks, and adds the second mapping table to the target media file, wherein the second mapping table is used for describing the mapping relationship between the haptic signal tracks and the execution order, and the execution order is determined by the sequence of the suspension moments required by the track.

The player de-encapsulates the target media file to obtain a second mapping table; the next haptic signal track that needs to be mounted is determined according to the currently mounted haptic signal track and the second mapping table; and the haptic signal track is cached in advance before track switching, so that when subsequent track switching is performed, the haptic signal track corresponding to the current output grayscale map in the grayscale map track can be quickly found from the cache and the mounting is completed.

Illustratively, at time T1, a C1 track in haptic signal tracks is mounted, and the player continuously extracts a sample from the C1 track, and according to the second mapping table, determines that the next haptic signal tracks that needs to be mounted is a C2 track, and caches the C2 track in advance at time T2 (namely, before track switching); and at time T3 of track switching (such as the time when the player receives a C2 track suspension request), the player immediately parses the sample in the C2 track in the cache so as to complete mounting. It can be understood that, according to the second mapping table, the player can know which haptic signal tracks are likely to be called at the current moment, so as to find and cache the haptic signal tracks likely to be called in advance, which is equivalent to realizing pre-mounting of the haptic signal tracks to be mounted.

In one embodiment, the video production device generates a second mapping table corresponding to each of the haptic signal tracks according to a sample index (the sample index may be a sample serial number or an address of the sample in a box, etc.) and an execution order of the key frames of each of the haptic signal tracks. After the player parses out the key frames in the currently mounted haptic signal tracks, the sample index of the key frame of the next haptic signal track that needs to be mounted can be determined according to the second mapping table, so that the player can accurately know the Chunk which may be called according to the sample index (the haptic signal tracks is composed of at least one Chunk), and then determine the Sample position corresponding to the current moment on the Chunk which may be called, thereby achieving mounting.

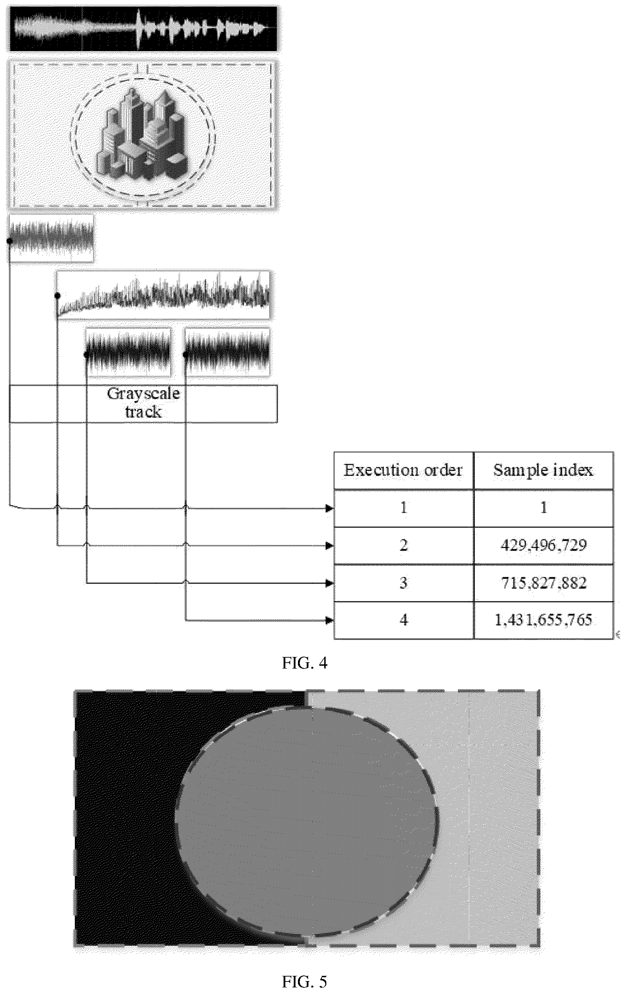

As a possible implementation, as shown in FIG. 4, a key frame of haptic signal track is determined as a starting sample of the haptic signal track, and the second mapping table is generated based on a sample index and an execution order of the starting sample of each of the haptic signal tracks. Illustratively, the syntax of the second mapping table is defined as follows:

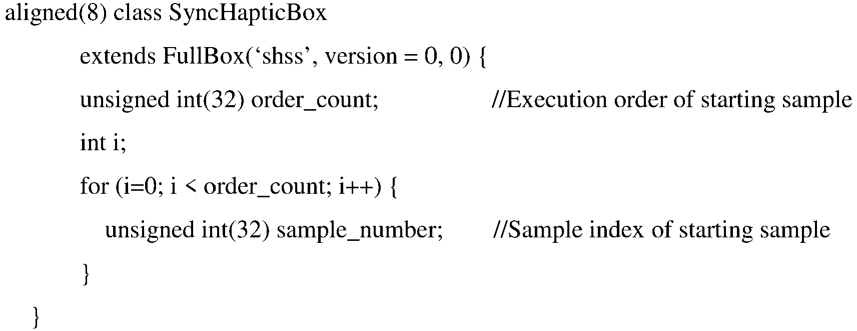

In one embodiment, in the case where the target media file includes a box for each of the haptic signal tracks, the second mapping table corresponding to each of the haptic signal tracks may be added to a respective box, and the second mapping table corresponding to the haptic signal tracks refers to: a second mapping table at least describing the execution order of the haptic signal tracks and its next desired mounted haptic signal track.

The present disclosure adds the first mapping table to the box of a corresponding haptic signal track and newly proposes a Box type, that is, a Box for storing the mapping relationship between the sample index and the execution order of the sample (Haptic Time To Sample Box, abbreviated as htts). The video production device can generate htts (namely, a second target box) corresponding to each of the haptic signal tracks according to the second mapping table corresponding to each of the haptic signal tracks, and add each of the second target boxes to the box of a corresponding haptic signal track.

### Embodiment III

This embodiment describes an example of a grayscale map in a grayscale map track.

The grayscale map track can adopt the form of a grayscale map sample (namely, a grayscale sample) to encapsulate a grayscale map corresponding to each frame in the video data, and at this moment, one grayscale map track is composed of a plurality of grayscale map samples, and the grayscale map sample includes at least one grayscale map, and at this moment, the player can extract the grayscale map sample corresponding to at least one frame of image (such as a piece of video) in the video data from the mounted grayscale map track.

Case 1: A grayscale map characterizes the position distribution of all or part of the haptic regions corresponding to a single frame in the video data.

As shown in FIG. 5, for a single frame including three haptic regions, the grayscale map corresponding to the frame may correspond to a grayscale region including three different grayscale values. The position distribution of the three grayscale regions in the grayscale map is the same as the position distribution of the corresponding three haptic regions in the frame.

Taking a movie scene as an example, an application scene of the above-mentioned case 1 is described.

With regard to a 4D movie with haptic interaction designed, when media file encapsulation is performed on the 4D movie, firstly, one or more grayscale maps corresponding to each frame are generated according to a haptic region included in each frame in the video data of the 4D movie. For example, for a frame including three haptic regions, one grayscale map may be generated to characterize the position distribution of the three haptic regions in the frame; two grayscale maps may also be generated, one for characterizing the position distribution of one haptic region in the frame and the other for characterizing the position distribution of the remaining two haptic regions in the frame. Encapsulating the generated one or two grayscale maps into a grayscale map sample corresponding to the frame, and generating a grayscale map track corresponding to the video data based on the grayscale map sample corresponding to each frame of image in the video data respectively.

When generating a grayscale map corresponding to any frame, it is necessary to respectively assign at least one grayscale value to each haptic region in the frame, and then generate a corresponding grayscale map based on the grayscale value assigned to the haptic region. For example, if the grayscale values assigned to a certain haptic region are 0 and 1, the position distribution of the haptic region in the frame can be determined firstly, and then the grayscale value of each pixel point at the same position distribution in the grayscale map is set as 0 or 1, so that the characterizing of the position distribution of the haptic region in the frame video image is realized by the position distribution of the grayscale regions in the grayscale map composed of the grayscale values of 0 and 1. After the grayscale values are assigned to the haptic regions, the mapping relationship between the grayscale value assigned to each haptic region and the haptic signal tracks corresponding to the haptic region can be recorded through the first mapping table.

Encapsulating the above-mentioned first mapping table, grayscale map track and video data into the target media file, and transmitting the same to the player of a cinema. Then the player de-encapsulates the target media file, outputs the video data, and mounts the grayscale map track. At this moment, the player can present the output video data via a projection device in the cinema, and the mounted grayscale map track will output a grayscale map according to a time sequence. At this moment, the player finds and mounts a corresponding haptic signal track via a first mapping table according to a grayscale map corresponding to an image current output by the projection device (namely, a current output grayscale map in the grayscale map track); and the mounted haptic signal tracks will output a haptic signal according to a time sequence. The player then presents the output haptic signal using a haptic actuator (e.g. a vibrating seat) in the cinema.

It should be understood that, as the image of the video image changes during the output period (i.e. the quantity and position distribution of the haptic region presented changes), the quantity and position distribution of the grayscale regions presented by the grayscale map track should also change.

Case 2: A grayscale map characterizes the position distribution of a haptic region corresponding to a single frame in video data.

The video player determines each of the haptic signal sources corresponding to the video data, one haptic signal source corresponding to one haptic signal track; determines a haptic region respectively corresponding to each of the haptic signal sources according to a corresponding region of the haptic signal of each of the haptic signal sources in each frame of the video data, wherein the haptic region can be the whole image region; generates a grayscale map track respectively corresponding to each of the haptic signal sources according to a grayscale value and a haptic region respectively corresponding to each of the haptic signal sources, wherein a single grayscale map track characterizes the position distribution of the haptic region corresponding to a single haptic signal source in the video data.

Taking the telesurgery scene as an example, the application scene of the above Case 2 is described. For telesurgery scenes, the requirements can be divided into the following:
Requirement I: a plurality of haptic signal tracks;
Requirement II: different from pre-fabricated scenes where video including haptic information is compressed and then output, telesurgery involves the presentation of haptic signals in real-time scenes. This allows each of the haptic signal tracks to no longer be graphed in advance in the manner of Case 1 to characterize the grayscale map of the position distribution of multiple haptic regions to achieve track matching.
Requirement III: it not only involves haptic information of vibration, but also includes feedback information of manual engineering strength, etc.

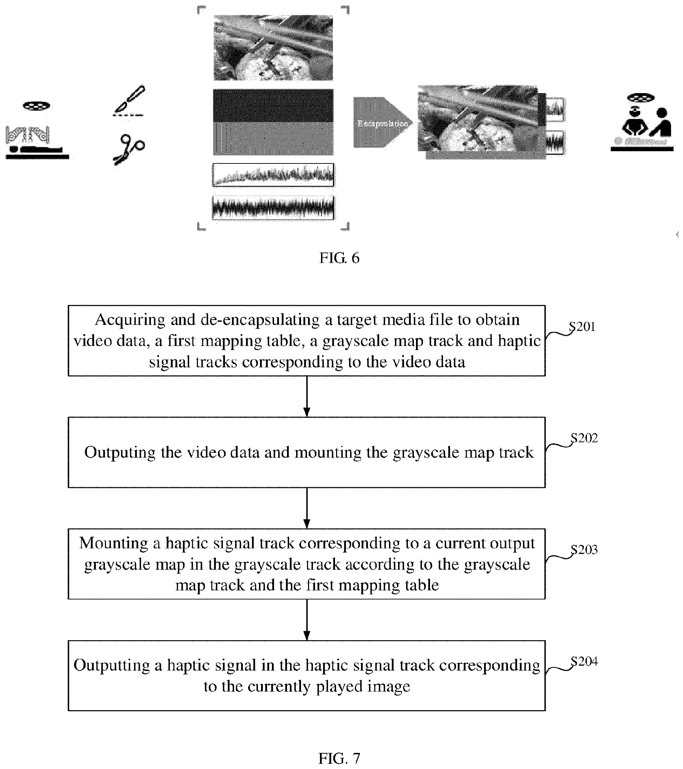

In response to the above-mentioned requirements, as shown in FIG. 6, the present disclosure uses a scalpel and surgical scissors as two haptic signal sources, and establishes two grayscale map tracks and two haptic signal tracks, wherein one haptic signal source corresponds to one grayscale map track and one haptic signal track, and one grayscale map track may contain only one grayscale value. Taking a surgical knife as an example, the grayscale map presented in the grayscale map track corresponding to the surgical knife is used for characterizing the position of the surgical knife in the current output video image (namely, the haptic region corresponding to the surgical knife), the haptic signal presented in the haptic signal tracks corresponding to the surgical knife is the haptic signal of the haptic region corresponding to the surgical knife, and the haptic signal is generated according to manual ergonomic feedback information about the position of the surgical knife in the current output video image, and varies with the position of the surgical knife in the video image; the haptic signal tracks of the scalpel will real-time describe the feedback information about the soft and hard degree of the surgical lesion tissue at the location of the scalpel, the haptic feedback that the scalpel is obstructed, and other manual ergonomic feedback.

Before surgery, the player can test whether the connection relationship established between the surgical knife and surgical scissors and the grayscale map track and the haptic signal tracks is correct, and make corrections in time, so as to avoid the occurrence of wrong connection conditions such as the connection between the grayscale map track corresponding to the surgical scissors and the surgical knife. Since in the target encapsulation file transmitted between the encapsulation side (i.e. the video production end where the patient is located) and the de-encapsulation side (i.e. the video playing end where the doctor is located), two grayscale map tracks with a very flat grayscale map and a single color are used to characterize the component haptic signal source (i.e. the sub-haptic region), the bandwidth required for transmitting the target encapsulation file is less, which can better meet the low time delay requirement of the telesurgery scene.

### Embodiment IV

This embodiment describes an example of assigning a haptic actuator.

Considering that the player loads the target media file, it is first necessary to know how many haptic tracks are contained in this file in total in order to make a reasonable assignment of relevant resources in advance (e.g. allocation of haptic actuators in the player). The present disclosure thus contemplates adding the quantity of haptic regions in the video data or the quantity of grayscale values in the grayscale map track to the target media file.

Case 1: A video production device counts the quantity of haptic regions in the video data and adds the quantity of haptic regions to the target media file.

In this embodiment, after the player encapsulates the target media file, the quantity of haptic signal tracks can be determined according to the obtained number of haptic regions, so that a haptic actuator can be assigned in advance to each of the haptic signal tracks according to the quantity of haptic signal tracks, so as to realize the timely and reasonable allocation of the haptic actuator so that the player can subsequently trigger the haptic actuator corresponding to the haptic signal tracks in time to output a corresponding haptic signal.

Case 2: In the case where one haptic signal track corresponds to one gray value in the grayscale map, the video production device counts the quantity of grayscale values in the grayscale map track, and adds the quantity of grayscale values to the target media file.

In this embodiment, after the player de-encapsulates the target media file, the quantity of haptic signal tracks can be determined according to the obtained quantity of grayscale values, so that a haptic actuator can be respectively assigned to each of the haptic signal tracks according to the quantity of haptic signal tracks, and a haptic actuator corresponding to the haptic signal tracks is selected to be triggered to output a haptic signal; and it can avoid the case where the player allocates all the haptic signal tracks in the target media file to the same haptic actuator because the player does not know the quantity of haptic signal tracks so that the rendering effect of the haptic signal is not good.

As one possible implementation, where the target media file includes a box of the grayscale map track, the quantity of grayscale values in the grayscale map track may be added to the box of the grayscale map track, such as may be added to a media header or a track header of the box of the grayscale map track.

It will be appreciated that in a track-chunk-Sample classification, to encapsulate grayscale track description information (e.g. the quantity of grayscale values in a grayscale map track) in a grayscale map track, content can be added to a track header (tkhdh) in the box of the grayscale map track or to a media header (mdhd) in the box of the grayscale map track.

The media header is used for storing overall information about the media, and the existing media header includes the following information in table 1:

**Table 1**

| Version | an integer that specifies the version of this box (0 or 1) |
|---|---|
| Creation_time | an integer that declares the creation time of the media in this track (in seconds since midnight, Jan. 1, 1904, in UTC time) |
| Modification_time | an integer that declares the most recent time the media in this track was modified (in seconds since midnight, Jan. 1, 1904, in UTC time) |
| Timescale | an integer that specifies the time-scale for this media; this is the number of time units that pass in one second. For example, a time coordinate system that measures time in sixtieths of a second has a time scale of 60 |
| Duration | an integer that declares the duration of this media (in the scale of the timescale) |
| Language | declares the language code for this media. See ISO 639-2/T for the set of three-character codes. Each character is packed as the difference between its ASCII value and 0x60. Since the code is confined to being three lower-case letters, these values are strictly positive |

The track head is used for storing description information about the current track, and the existing track head includes the following information in table 2:

**Table 2**

| Version | an integer that specifies the version of this box (0 or 1 in this specification) |
|---|---|
| Flags | a 24-bit integer with flags; the following values are defined: Track_enabled: Indicates that the track is enabled. Flag value is 0x000001. A disabled track (the low bit is zero) is treated as if it were not present. |
| | Track_in_movie: Indicates that the track is used in the presentation. Flag value is 0x000002. |
| | Track_in_preview: Indicates that the track is used when previewing the presentation. Flag value is 0x000004. |
| Creation_time | an integer that declares the creation time of this track (in seconds since midnight, Jan. 1, 1904, in UTC time) |
| Modification_time | an integer that declares the most recent time the track was modified (in seconds since midnight, Jan. 1, 1904, in UTC time) |
| Track _ID | an integer that uniquely identifies this track over the entire life-time of this presentation. Track IDs are never re-used and cannot be zero. |
| Duration | an integer that indicates the duration of this track (in the timescale indicated in the Movie Header Box). The value of this field is equal to the sum of the durations of all of the track's edits. If there is no edit list, then the duration is the sum of the sample durations, converted into the timescale in the Movie Header Box. If the duration of this track cannot be determined then duration is set to all 1s (32-bit maxint). |
| Layer | the front-to-back ordering of video tracks; tracks with lower numbers are closer to the viewer. 0 is the normal value, and -1 would be in front of track 0, and so on. |
| Alternate_group | an integer that specifies a group or collection of tracks. If this field is 0 there is no information on possible relations to other tracks. If this field is not 0, it should be the same for tracks that contain alternate data for one another and different for tracks belonging to different such groups. Only one track within an alternate group should be played or streamed at any one time, and must be distinguishable from other tracks in the group via attributes such as bitrate, codec, language, packet size etc. A group may have only one member. |
| Volume | a fixed 8.8 value specifying the track's relative audio volume. Full volume is 1.0 (0x0100) and is the normal value. Its value is irrelevant for a purely visual track. Tracks may be composed by combining them according to their volume, and then using the overall Movie Header Box volume setting; or more complex audio composition (e.g. MPEG-4 BIFS) may be used. |
| Matrix | a transformation matrix for the video; (u,v,w) are restricted here to (0,0,1), hex (0,0,0x40000000). |
| Width and height | specify the track's visual presentation size as fixed-point 16.16 values. These need not be the same as the pixel dimensions of the images, which is documented in the sample description(s); all images in the sequence are scaled to this size, before any overall transformation of the track represented by the matrix. The pixel dimensions of the images are the default values. |

In a second aspect, as shown in FIG. 7, embodiments of the present disclosure provide another media file processing method including at least the following steps:
Step S201: acquiring and de-encapsulating a target media file to obtain video data, a first mapping table, a grayscale map track corresponding to the video data, and the haptic signal tracks;
wherein the grayscale map track includes a grayscale map corresponding to each frame in the video data, the grayscale map corresponding to each frame is used for characterizing the position distribution of a haptic region corresponding to each frame, and one haptic signal track corresponds to at least one grayscale value in the grayscale map;
Step S202: outputting the video data and mounting the grayscale map track;
Step S203: mounting haptic signal tracks corresponding to the current output grayscale map in the grayscale track according to the grayscale map track and the first mapping table;
Step S204: outputting a haptic signal in haptic signal tracks corresponding to the current output grayscale map.

It can be seen from the above-mentioned steps that by encapsulating the grayscale map track, the haptic signal tracks and the video data together in the target media file, characterizing the position distribution of the haptic region of each frame in the video data is realized in the target media file, and by adding the first mapping table to the target media file, characterizing the mapping relationship between each grayscale value in the grayscale map track and each of the haptic signal tracks is realized in the target media file, thereby enabling the target media file to realize the haptic signal encapsulation of the sub-haptic region, which meet the different haptic interaction operation requirements in different regions of the image.

As a possible embodiment, in the case where one haptic signal track corresponds to one grayscale value in the grayscale map, the information obtained by de-encapsulating the target media file further includes: a quantity of grayscale values in the grayscale map track; the method further includes:
determining a quantity of the haptic signal tracks according to the quantity of the grayscale values;
assigning a haptic actuator to each of the haptic signal tracks according to the quantity of the haptic signal tracks; and
outputting a haptic signal in a sample corresponding to the current output image, includes:
   triggering a haptic actuator corresponding to haptic signal tracks where the sample is located to output a haptic signal in the sample.

As a possible embodiment, the information resulting from de-encapsulating the target media file further includes: a second mapping table for describing a mapping relationship between haptic signal tracks and an execution order; the method further includes:
determining the next haptic signal track that needs to be mounted according to the currently mounted haptic signal tracks and the second mapping table, and caching the haptic signal tracks; and
mounting haptic signal tracks corresponding to each grayscale map in the grayscale track according to the grayscale map track and the first mapping table, includes:
   according to the grayscale map track and the first mapping table, mounting haptic signal tracks corresponding to a current output grayscale map in the grayscale map track from a cache.

In the media file processing method provided by the embodiments of the present disclosure, the execution subject may be a media file processing apparatus. In the embodiments of the present disclosure, the media file processing apparatus provided by the embodiments of the present disclosure is described by taking the media file processing apparatus performing the media file processing method as an example.

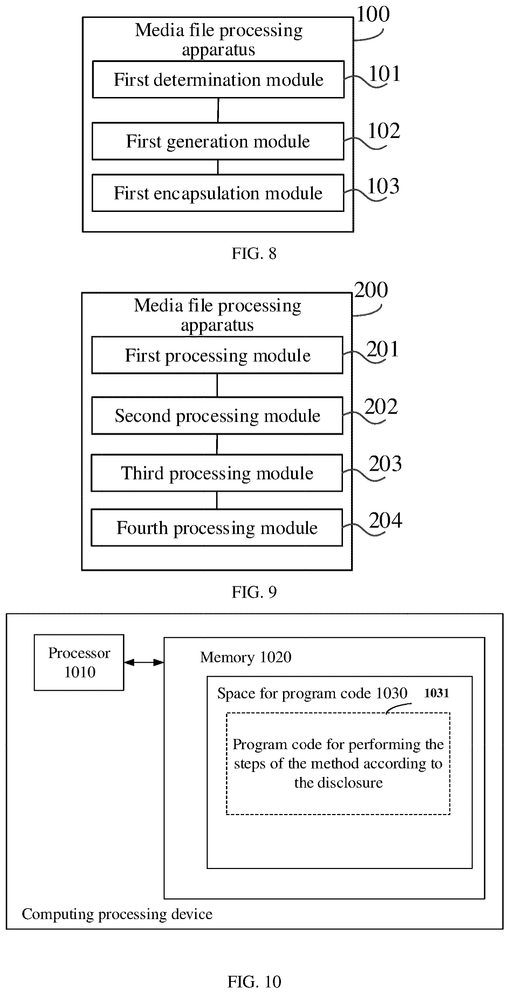

In a third aspect, embodiments of the present disclosure provide a media file processing apparatus, as shown in FIG. 8, the media file processing apparatus 100 includes:
a first determination module 101, for determining a grayscale map track and haptic signal tracks corresponding to video data, wherein the grayscale map track includes a grayscale map corresponding to each frame in the video data, the grayscale map corresponding to each frame is used for characterizing a position distribution of a haptic region corresponding to each frame, and each of the haptic signal tracks includes a haptic signal corresponding to each haptic region in the video data;
a first generation module 102, for generating a first mapping table according to each grayscale value in the grayscale map tracks and the haptic signal tracks; and
a first encapsulation module 103, for encapsulating the first mapping table, the grayscale map track, the haptic signal tracks, and the video data to obtain a target media file.

Optionally, the first generation module 102 includes:
a first generation sub-module for generating the first mapping table according to a grayscale value corresponding to each of the haptic signal tracks, and a track index of each of the haptic signal tracks.

Optionally, the target media file includes a box of the grayscale map track; the first encapsulation module 103 includes:
a second encapsulation module for adding the first mapping table to the box of the grayscale map track.

Optionally, the second encapsulation module includes:
a first encapsulation sub-module for generating a first target box according to the first mapping table; and
a second encapsulation sub-module for adding the first target box to a box of the grayscale map track.

Optionally, the apparatus further includes:
a first statistical module for counting a quantity of the haptic regions in the video data; and
the first encapsulation module 103 includes:
   a third encapsulation module for encapsulating the quantity of the haptic regions, the first mapping table, the grayscale map track, the haptic signal tracks, and the video data to obtain the target media file.

Optionally, when one haptic signal track corresponds to one grayscale value in the grayscale map, the apparatus further includes:
a second statistical module for counting a quantity of grayscale values in the grayscale map track; and
the first encapsulation module 103 includes:
   a fourth encapsulation module for encapsulating the quantity of the grayscale values, the first mapping table, the grayscale map track, the haptic signal tracks, and the video data to obtain the target media file.

Optionally, the target media file includes a box of the grayscale map track; the fourth encapsulation module includes:
a third encapsulation sub-module for adding the quantity of the grayscale values to a box of the grayscale map track.

Optionally, the third encapsulation sub-module includes:
a fourth encapsulation sub-module for adding the quantity of the grayscale values to a media header or a track header of a box of the grayscale map track.

Optionally, the apparatus further includes:
a second generation module for generating a second mapping table according to the execution order of each of the haptic signal tracks; and
the first encapsulation module 103 includes:
   a fifth encapsulation module for encapsulating the second mapping table, the first mapping table, the grayscale map track, the haptic signal tracks, and the video data to obtain the target media file.

Optionally, the second generation module includes:
a second generation sub-module for generating second mapping tables respectively corresponding to each of the haptic signal tracks according to the sample index and the execution order of the key frames of each of the haptic signal tracks.

Optionally, the key frame of each of the haptic signal tracks is a starting sample of each of the haptic signal tracks.

Optionally, the target media file includes a box of each of the haptic signal tracks; and the fifth encapsulation module includes:
a fifth encapsulation sub-module for adding a second mapping table corresponding to each of the haptic signal tracks to a respective box.

Optionally, the fifth encapsulation sub-module includes:
a sixth encapsulation sub-module for generating a second target box respectively corresponding to each of the haptic signal tracks according to a second mapping table respectively corresponding to each of the haptic signal tracks; and
a seventh encapsulation sub-module for adding each of the second target boxes to a box of a corresponding haptic signal track.

Optionally, the first determination module 101 includes:
a first determination sub-module for determining each of the haptic signal sources corresponding to the video data, one haptic signal source corresponding to one haptic signal track;
a second determination sub-module for determining a haptic region respectively corresponding to each of the haptic signal sources according to a corresponding region of the haptic signal of each of the haptic signal sources in each frame of the video data; and
a third determination sub-module for generating a grayscale map track corresponding to each of the haptic signal sources according to a grayscale value and a haptic region respectively corresponding to each of the haptic signal sources.

The media file processing apparatus provided by the embodiments of the present disclosure can implement the various processes implemented by the embodiments of the media file processing method described in the first aspect and achieve the same technical effect, and in order to avoid repetition, the description thereof will not be repeated.

In a fourth aspect, the embodiments of the present disclosure provide another media file processing apparatus, as shown in FIG. 9, the media file processing apparatus 200 includes:
a first processing module 201, for acquiring and de-encapsulating a target media file to obtain video data, a first mapping table, and a grayscale map track and the haptic signal tracks corresponding to the video data, wherein the grayscale map track includes grayscale maps respectively corresponding to each frame in the video data, and grayscale maps respectively corresponding to each frame is used for characterizing a position distribution of a haptic region corresponding to each frame;
a second processing module 202, for outputting the video data and mounting the grayscale map track;
a third processing module 203, for mounting a haptic signal track corresponding to a current output grayscale map in the grayscale track according to the grayscale map track and the first mapping table; and
a fourth processing module 204, for outputting a haptic signal in haptic signal tracks corresponding to the current output grayscale map.

Optionally, in the case where one haptic signal track corresponds to one grayscale value in the grayscale map, the information obtained by de-encapsulating the target media file further includes: the quantity of grayscale values in the grayscale map track; the apparatus further includes:
a fifth processing module for determining the quantity of haptic signal tracks according to the quantity of grayscale values;
a sixth processing module for respectively assigning a haptic actuator to each of the haptic signal tracks according to the quantity of the haptic signal tracks; and
the fourth processing module 204 includes:
   a first processing sub-module for triggering a haptic actuator corresponding to haptic signal tracks where the sample is located to output a haptic signal in the sample.

Optionally, the information obtained by de-encapsulating the target media file further includes: a second mapping table for describing a mapping relationship between the haptic signal tracks and an execution order; the apparatus further includes:
a seventh processing module for determining the next haptic signal track that needs to be mounted according to a currently mounted haptic signal tracks and the second mapping table, and caching the haptic signal tracks; and
the third processing module 203 includes:
   a second processing sub-module for mounting the haptic signal tracks corresponding to the current output grayscale map in the grayscale map track from a cache according to the grayscale map track and the first mapping table.

Optionally, the fourth processing module 204 includes:
a third processing sub-module, for in response to detecting a haptic interaction operation with respect to a current output image in the video data, outputting a haptic signal corresponding to the current output image from haptic signal tracks corresponding to a haptic region where the haptic interaction operation currently mounted is located.

The media file processing apparatus provided by the embodiments of the present disclosure can implement the various processes implemented by the embodiments of the media file processing method described in the second aspect and achieve the same technical effect, and in order to avoid repetition, the description thereof will not be repeated.

The above described embodiments of the device are only illustrative, where the units described as separate components may or may not be physically separated, and the components displayed as units may or may not be physical units, that is, they can be located in one place or distributed across multiple network units. Some or all of the modules can be selected according to actual needs to achieve the purpose of this embodiment. Persons skilled in the art can understand and implement without putting in creative effort.

The various component embodiments of the present disclosure can be implemented in hardware, software modules running on one or more processors, or a combination thereof. Persons skilled in the art should understand that microprocessors or digital signal processors (DSPs) can be used in practice to implement some or all of the functions of some or all components in the computing processing device according to the embodiments of the present disclosure. The present disclosure can also be implemented as a device or apparatus program (e.g., computer program and computer program product) for performing part or all of the methods described herein. This implementation of the program of the present disclosure can be stored on a computer-readable medium or can take the form of one or more signals. Such signals can be downloaded from internet websites, provided on carrier signals, or provided in any other form.

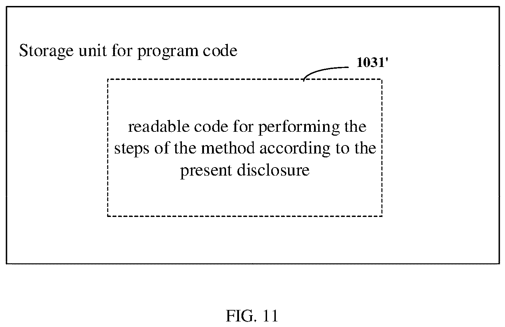

For example, FIG. 10 illustrates a computing processing device that can implement the method of the present disclosure. The computing processing device traditionally includes a processor 1010 and a computer program product or computer-readable medium in the form of a memory 1020. The memory 1020 can be devices such as a flash memory, EEPROM (electrically erasable programmable read-only memory), EPROM, Electronic storage devices such as hard drives or ROM. The memory 1020 has a storage space 1030 for executing program code 1031 of any method steps in the above method. For example, the storage space 1030 for program code may include various program codes 1031 for implementing the various steps in the above method. These program codes can be read from or written into one or more computer program products. These computer program products include program code carriers such as hard drives, compact disks (CDs), memory cards, or floppy disks. Such computer program products are typically portable or fixed storage units as described in reference to FIG. 11. The storage unit may have storage segments, storage space, etc. arranged similarly to the memory 1020 in the computing processing device of FIG. 10. The program code can be compressed in an appropriate form, for example. Typically, the storage unit includes computer-readable code 1031', which is code that can be read by a processor such as 1010. When executed by a computing processing device, this code causes the computing processing device to perform various steps in the method described above.

This embodiment of the present disclosure also provides a media file processing device, including a processor and a memory. The memory stores programs or instructions that can run on the processor. When the programs or instructions are executed by the processor, they implement the various processes of the above media file processing method embodiments and achieve the same technical effects. To avoid repetition, they will not be repeated here.

This embodiment of the present disclosure also provides a readable storage medium on which a program or instruction is stored. When the program or instruction is executed by a processor, it implements the various processes of the above media file processing method embodiments and can achieve the same technical effect. To avoid repetition, it will not be repeated here.

Among them, the processor is the processor in the terminal device described in the above embodiments. The readable storage medium includes computer-readable storage media such as read-only memory (ROM), random access memory (RAM), magnetic disk or optical disk, etc.

This embodiment of the present disclosure provides another chip, which includes a processor and a communication interface. The communication interface is coupled to the processor, and the processor is used to run programs or instructions to implement the various processes of the above media file processing method embodiments, and can achieve the same technical effect. To avoid repetition, it will not be repeated here.

It should be understood that the chips mentioned in this embodiment of the present disclosure can also be referred to as system level chips, system chips, chip systems, or on-chip system chips, etc.

This embodiment of the present disclosure also provides a computer program/program product, which is stored in a storage medium and executed by at least one processor to implement the various processes of the above media file processing method embodiments, and can achieve the same technical effect. To avoid repetition, it will not be repeated here.

This embodiment of the present disclosure also provides a media file processing system, including a video production device and a video output device. The video production device is used to execute the steps of the media file processing method as described in the first aspect, and the video output device is used to execute the steps of the media file processing method as described in the second aspect.

It should be noted that in this specification, the terms "including/comprising", "containing", or any other variation thereof are intended to encompass non-exclusive inclusion, such that a process, method, article, or apparatus that includes a series of elements not only includes those elements, but also includes other elements not explicitly listed, or also includes elements inherent to such process, method, article, or apparatus. Without further limitations, the element limited by the statement "including one..." does not exclude the existence of other identical elements in the process, method, article, or device that includes that element. In addition, it should be pointed out that the scope of the methods and devices of the present disclosure in this embodiment is not limited to performing functions in the order shown or discussed, and may also include performing functions in a substantially simultaneous manner or in the opposite order according to the functions involved. For example, the described methods may be performed in a different order than described, and various steps may be added, omitted, or combined. Additionally, the features described with reference to certain examples can be combined in other examples.

Through the description of the above implementation methods, persons skilled in the art can clearly understand that the above implementation methods can be implemented through software and necessary general hardware platforms. Certainly, they can also be implemented through hardware, but in many cases, the former is the better implementation method. Based on this understanding, the technical solution disclosed in the present disclosure can essentially or contribute to related art in the form of a computer software product, which is stored in a storage medium (such as ROM/RAM, magnetic disk, optical disk) and includes several instructions to enable a terminal (which can be a mobile phone, computer, server, air conditioner, or network device, etc.) to execute the methods described in various embodiments of the present disclosure.

The embodiments of the present disclosure have been described above in conjunction with the accompanying drawings, but the present disclosure is not limited to the specific embodiments described above. The specific embodiments described above are only illustrative and not restrictive. Those skilled in the art can also make many forms within the scope of protection of the present disclosure without departing from the purpose and claims of the present disclosure.

The term "one embodiment", "embodiment" or "one or more embodiments" referred to in this specification means that specific features, structures or characteristics described in conjunction with the embodiments are included in at least one embodiment of the present disclosure. Furthermore, please note that the word "in one embodiment" may not necessarily refer to the same embodiment.

In the specification provided here, a large number of specific details are explained. However, it can be understood that the embodiments of the present disclosure can be practiced without these specific details. In some examples, well-known methods, structures, and techniques are not shown in detail to avoid blurring the understanding of this specification.

In the claims, any reference symbols located between parentheses should not be constructed as limitations on the claims. The word "comprising" does not exclude the existence of elements or steps that are not listed in the claims. The word "a/an" or "one" before the component does not exclude the existence of multiple such components. The present disclosure can be implemented by means of hardware including several different components and by means of appropriately programmed computers. In the unit claims listing several devices, several of these devices may be specifically embodied through the same hardware item. The use of words such as first, second, and third does not indicate any order. These words can be interpreted as names.

Finally, it should be noted that the above embodiments are only used to illustrate the technical solution of the present disclosure and not to limit it. Although the present disclosure has been described in detail with reference to the aforementioned embodiments, those skilled in the art should understand that they can still modify the technical solutions described in the aforementioned embodiments, or equivalently replace some of the technical features. And these modifications or substitutions do not depart from the essence and scope of the corresponding technical solutions disclosed in the present disclosure.

## Claims

1. A media file processing method, **characterized in that** the method comprises:
determining a grayscale map track and haptic signal tracks corresponding to video data , wherein the grayscale map track comprises a grayscale map corresponding to each frame in the video data, the grayscale map corresponding to each frame is used for characterizing a position distribution of a haptic region corresponding to each frame, and each of the haptic signal tracks comprises a haptic signal corresponding to each of the haptic regions in the video data;
generating a first mapping table according to each grayscale value in the grayscale map track and the haptic signal tracks; and
encapsulating the first mapping table, the grayscale map track, the haptic signal tracks, and the video data to obtain a target media file.

2. The method according to claim 1, **characterized in that** generating a first mapping table according to each grayscale value in the grayscale map track and the haptic signal tracks comprises:
generating the first mapping table according to a grayscale value corresponding to each of the haptic signal tracks, and a track index of each of the haptic signal tracks.

3. The method according to claim 1, **characterized in that** the target media file comprises a box of the grayscale map track; and
the first mapping table is encapsulated into the target media file by a following step:
adding the first mapping table to the box of the grayscale map track.

4. The method according to claim 3, **characterized in that** adding the first mapping table to the box of the grayscale map track comprises:
generating a first target box according to the first mapping table; and
adding the first target box to the box of the grayscale map track.

5. The method according to claim 1, **characterized in that** the method further comprises:
counting a quantity of the haptic regions in the video data; and
encapsulating the first mapping table, the grayscale map track, the haptic signal tracks, and the video data to obtain a target media file, comprises:
encapsulating the quantity of the haptic regions, the first mapping table, the grayscale map track, the haptic signal tracks, and the video data, to obtain the target media file.

6. The method according to claim 1, **characterized in that** in the case where one haptic signal track corresponds to one grayscale value in the grayscale map, the method further comprises:
counting a quantity of grayscale values in the grayscale map track; and
encapsulating the first mapping table, the grayscale map track, the haptic signal tracks, and the video data to obtain a target media file, comprises:
encapsulating the quantity of the grayscale values, the first mapping table, the grayscale map track, the haptic signal tracks, and the video data to obtain the target media file.

7. The method according to claim 6, **characterized in that** the target media file comprises a box of the grayscale map track; and
the quantity of the grayscale values is encapsulated into the target media file by a following step:
adding the quantity of the grayscale values to the box of the grayscale map track.

8. The method according to claim 7, **characterized in that** adding the quantity of the grayscale values to the box of the grayscale map track comprises:
adding the quantity of the grayscale values to a media head or track head of the box of the grayscale map track.

9. The method according to claim 1, **characterized in that** the method further comprises:
generating a second mapping table according to a mapping relationship between the haptic signal tracks and an execution order; and
encapsulating the first mapping table, the grayscale map track, the haptic signal tracks, and the video data to obtain a target media file, comprises:
encapsulating the second mapping table, the first mapping table, the grayscale map track, the haptic signal tracks, and the video data to obtain the target media file.

10. The method according to claim 9, **characterized in that** generating a second mapping table according to a mapping relationship between the haptic signal tracks and an execution order, comprises:
according to a mapping relationship between a sample index of a key frame of each of the haptic signal tracks and the execution order, generating second mapping tables respectively corresponding to each of the haptic signal tracks.

11. The method according to claim 10, **characterized in that** the key frame of each of the haptic signal tracks is a starting sample of each of the haptic signal tracks.

12. The method according to claim 10, **characterized in that** the target media file comprises a box of each of the haptic signal tracks;
the second mapping table is encapsulated into the target media file by a following step:
adding the second mapping table corresponding to each of the haptic signal tracks to a respective box.

13. The method according to claim 12, **characterized in that** adding the second mapping table corresponding to each of the haptic signal tracks to a respective box comprises:
generating a second target box corresponding to each of the haptic signal tracks according to the second mapping table corresponding to each of the haptic signal tracks; and
adding each of the second target boxes to the box of a corresponding haptic signal track.

14. The method according to any one of claims 1 to 13, **characterized in that** determining a grayscale map track corresponding to the video data comprises:
determining haptic signal sources corresponding to the video data, one haptic signal source corresponding to one haptic signal track;
determining a haptic region corresponding to each of the haptic signal sources according to a corresponding region of the haptic signal of each of the haptic signal sources in each frame of the video data; and
generating a grayscale map track corresponding to each of the haptic signal sources according to a grayscale value and a haptic region respectively corresponding to each of the haptic signal sources.

15. A media file processing method, **characterized in that** the method comprises:
acquiring and de-encapsulating a target media file, to obtain video data, a first mapping table, and a grayscale map track and haptic signal tracks corresponding to the video data, wherein the grayscale map track comprises a grayscale map corresponding to each frame in the video data, and a grayscale map corresponding to each frame is used for characterizing a position distribution of a haptic region corresponding to each frame;
outputting the video data and mounting the grayscale map track;
mounting a haptic signal track corresponding to a current output grayscale map in the grayscale track according to the grayscale map track and the first mapping table; and
outputting a haptic signal in the haptic signal track corresponding to the current output grayscale map.

16. The method according to claim 15, **characterized in that** information obtained by de-encapsulating the target media file further comprises: a quantity of the haptic regions in the video data; the method further comprises:
determining a quantity of the haptic signal tracks based on the quantity of the haptic regions;
assigning a haptic actuator to each of the haptic signal tracks according to the quantity of the haptic signal tracks; and
outputting a haptic signal in the haptic signal track corresponding to the current output grayscale map comprises:
triggering the haptic actuator corresponding to the haptic signal track to output the haptic signal.

17. The method according to claim 15, **characterized in that** in the case where one haptic signal track corresponds to one grayscale value in the grayscale map, information obtained by de-encapsulating the target media file further comprises: a quantity of grayscale values in the grayscale map track; the method further comprises:
determining a quantity of the haptic signal tracks according to the quantity of the grayscale values;
assigning a haptic actuator to each of the haptic signal tracks according to the quantity of the haptic signal tracks; and
outputting a haptic signal in the haptic signal track corresponding to the current output grayscale map comprises:
triggering the haptic actuator corresponding to the haptic signal track to output the haptic signal.

18. The method according to claim 15, **characterized in that** information obtained by de-encapsulating the target media file further comprises: a second mapping table for describing a mapping relationship between the haptic signal tracks and an execution order; the method further comprises:
determining a next haptic signal track that needs to be mounted according to a currently mounted haptic signal track and the second mapping table, and caching the haptic signal track; and
mounting a haptic signal track corresponding to each grayscale map in the grayscale track according to the grayscale map track and the first mapping table, comprises:
mounting the haptic signal track corresponding to the current output grayscale map in the grayscale map track from a cache according to the grayscale map track and the first mapping table.

19. The method according to any one of claims 15 to 18, wherein outputting a haptic signal in the haptic signal track corresponding to the current output grayscale map comprises:
in response to detecting a haptic interaction operation with respect to a current output image in the video data, outputting a haptic signal corresponding to the current output image from a haptic signal track corresponding to a haptic region where the haptic interaction operation currently mounted is located.

20. A media file processing apparatus, **characterized in that** the apparatus comprises:
a first determination module, configured for determining a grayscale map track and haptic signal tracks corresponding to video data, wherein the grayscale map track comprises a grayscale map corresponding to each frame in the video data, the grayscale map corresponding to each frame is used for characterizing a position distribution of a haptic region corresponding to each frame, and each of the haptic signal tracks comprises a haptic signal corresponding to each of the haptic regions in the video data;
a first generation module, configured for generating a first mapping table according to each grayscale value in the grayscale map tracks and the haptic signal tracks; and
a first encapsulation module, configured for encapsulating the first mapping table, the grayscale map track, the haptic signal tracks, and the video data to obtain a target media file.

21. A media file processing apparatus, **characterized in that** the apparatus comprises:
a first processing module, configured for acquiring and de-encapsulating a target media file to obtain video data, a first mapping table, and a grayscale map track and haptic signal tracks corresponding to the video data, wherein the grayscale map track comprises a grayscale map corresponding to each frame in the video data, and a grayscale map corresponding to each frame is used for characterizing a position distribution of a haptic region corresponding to each frame;
a second processing module, configured for outputting the video data and mounting the grayscale map track;
a third processing module, configured for mounting a haptic signal track corresponding to a current output grayscale map in the grayscale track according to the grayscale map track and the first mapping table; and
a fourth processing module, configured for outputting a haptic signal in haptic signal track corresponding to the current output grayscale map.

22. A media file processing device, comprising a processor and a memory storing a program or instruction executable on the processor, **characterized in that** the program or instruction, when executed by the processor, implements the steps of the media file processing method according to any one of claims 1 to 14.

23. A media file processing device, comprising a processor and a memory storing a program or instruction executable on the processor, **characterized in that** the program or instruction, when executed by the processor, implements the steps of the media file processing method according to any one of claims 15 to 19.

24. A computing processing device, comprising:
a memory, having a computer-readable code stored therein; and
one or more processors, when the computer-readable code is performed by the one or more processors, the computing processing device implements the media file processing method according to any one of claims 1 to 14 or implements the media file processing method according to any one of claims 15 to 19.

25. A computer program, comprising a computer-readable code which, when run on a computing processing device, causes the computing processing device to implement the media file processing method according to any one of claims 1 to 14 or to implement the media file processing method according to any one of claims 15 to 19.

26. A computer-readable medium, having a computer program according to claim 25 stored thereon.
